Europäisches Patentamt

European Patent Office

Office européen des brevets

(11) Veröffentlichungsnummer: **0 478 943 A1**

# (12) EUROPÄISCHE PATENTANMELDUNG

(21) Anmeldenummer: **91114157.0**

(22) Anmeldetag: **23.08.91**

(51) Int. Cl.5: **B61H 5/00**, B61H 15/00, F16D 55/10, F16D 65/847, B60T 1/06

(30) Priorität: **04.10.90 DE 4031333**

(43) Veröffentlichungstag der Anmeldung: **08.04.92 Patentblatt 92/15**

(84) Benannte Vertragsstaaten: **DE ES FR GB IT SE**

(71) Anmelder: **KNORR-BREMSE AG Moosacher Strasse 80 Postfach 401060 W-8000 München 40(DE)**

(72) Erfinder: **Wirth, Xaver, Dr. Birkuhnweg 18 W-8045 Ismaning(DE)**

(54) **Lamellenscheibenbremse für Schienenfahrzeuge.**

(57) Bei einer Lamellenscheibenbremse für Schienenfahrzeuge ist ein Lamellenpaket aus Rotor- und Statorelementen (5;7) mittels einer Zuspanneinrichtung (3) beaufschlagbar. Zur Erzielung einer verbesserten Kühlung der aus Kohlenstoff (CFC) bestehenden Rotor- und Statorelemente (5;7) ist das Lamellenpaket in einer aus Einzelpaketen bestehenden Zwillingsanordnung aufgeteilt. Zwischen den Einzelpaketen befindet sich die Zuspanneinrichtung, welche aus einer Spreizzylinderanordnung besteht.

Die Erfindung betrifft eine Lamellenscheibenbremse nach dem Gattungsbegriff des Patentanspruches 1.

In schnellfahrenden Schienenfahrzeugen kom- men neben herkömmlichen Bremsscheiben, wel- che aus Grauguß oder vergleichbaren Materialien bestehen können, auch in gekapselten Gehäusen laufende Reibscheiben, z.B. aus Kohlenstoff, zum Einsatz. Diese Reibscheiben besitzen kleinere ra- diale Abmessungen als herkömmliche Bremsschei- ben und sind vorzugsweise in einem Lamellenpaket geführt, d.h. sie wirken mit Statorelementen zusammen, welche aus dem gleichen Material bestehen und zusammen mit den Reibscheiben im Paket durch Zuspannzylinder oder dgl. Betätigungsele- mente beaufschlagbar sind. Derartige Bremsschei- benanordnungen erfordern aus Gründen der Oxidationsgefahr des Reibmaterials, oder um umgetragenes Reibmaterial zurückzuhalten, die vollständige Kapselung des Lamellenpaketes. Die Kühlung derartiger Bremsen durch Eigenbelüftung ist deshalb nicht möglich.

Infolge fehlender Eigenbelüftung kann es bei Lamellenpaketen der genannten Art insbesondere zu thermischen Problemen kommen, wobei von folgenden Gegebenheiten und Bedingungen auszugehen ist: nach erfolgter Bremsung eines Schienenfahrzeuges soll die Wärmeabfuhr trotz fehlender Eigenbelüftung in möglichst kurzer Zeit erfolgen. Die umgebenden Bauteile der Bremsanordnung sollen vor zu großer Hitze geschützt werden; hierbei handelt es sich im wesentlichen um das bzw. die Lager, die Zuspanneinrichtung, Nachstellorgane etc.. Es ist fernerhin auf unterschiedliche Wärmedehnung infolge Temperaturgefälles zu achten. Im besonderen ist für einen ausreichenden Schutz des Kohlenstoffmaterials (CFC-Material) vor Oxidation (ab ca. 600° Celsius) zu sorgen; dies betrifft bevorzugt die Reibflächen, welche nach dem Lösen der Bremse vor Oxidation zu schützen sind.

Mehrscheiben-Lamellenbremsen herkömmlicher Art sind insbesondere im Einsatz bei mit hoher Geschwindigkeit fahrenden Schienenfahrzeugen vermehrt den vorstehenden Problemen ausgesetzt.

Davon ausgehend besteht die Aufgabe der Erfindung darin, eine Lamellenscheibenbremse der gattungsgemäßen Art so auszugestalten, daß sie den genannten Erfordernissen ausreichender Kühlung bei gleichzeitig bestmöglichem Schutz vor Oxidation der Reibflächen genügt.

Zur Lösung dieser Aufgabe dienen die Merkmale nach dem Kennzeichnungsteil des Patenanspruches 1.

Die Aufteilung des Lamellenpakets in wenigstens zwei Einzelpakete vermittelt eine vergrößerte Kühlfläche für das CFC-Material, da wenigstens die Außenflächen zweier zwischen sich ein Rotorelement begrenzender Statorelemente Wärme in die Außenluft abgeben können. Der Vorteil einer als Einheit handhabbaren Scheibenbremse bleibt dennoch erhalten. Durch die Ausgestaltung in Zwillingsart ist eine symmetrische Lagerbelastung bei dynamischen Stößen gegeben; im besonderen ist es von Vorteil, daß das zentrale Lager als auch die Nachstelleinrichtungen für die Rotorelemente außerhalb des in sich gekapselten heißen Bereiches liegen. Die Radachse bzw. Welle ist gering belastet, da durch die Einzelpakete 2 Wärmequellen gebildet sind, welche weit auseinander liegen. Die Ausgestaltung der Bremse kann in kostengünstiger Weise vollzogen werden, da Gleichteile infolge Symmetrie entstehen. Auch ist der erforderliche Oxidationsschutz sowohl am Außen als auch am Innenumfang der beiden Einzelpakete aus Rotor- und Statorelementen durch Abdeckungen als auch durch herkömmliche Dichtungselemente sehr einfach zu vollziehen, d.h., daß kein unnötiger Verlust an Kühloberfläche in Kauf zu nehmen ist.

Weitere vorteilhafte Ausgestaltungen und Weiterbildungen sind in weiteren Patentansprüchen aufgeführt.

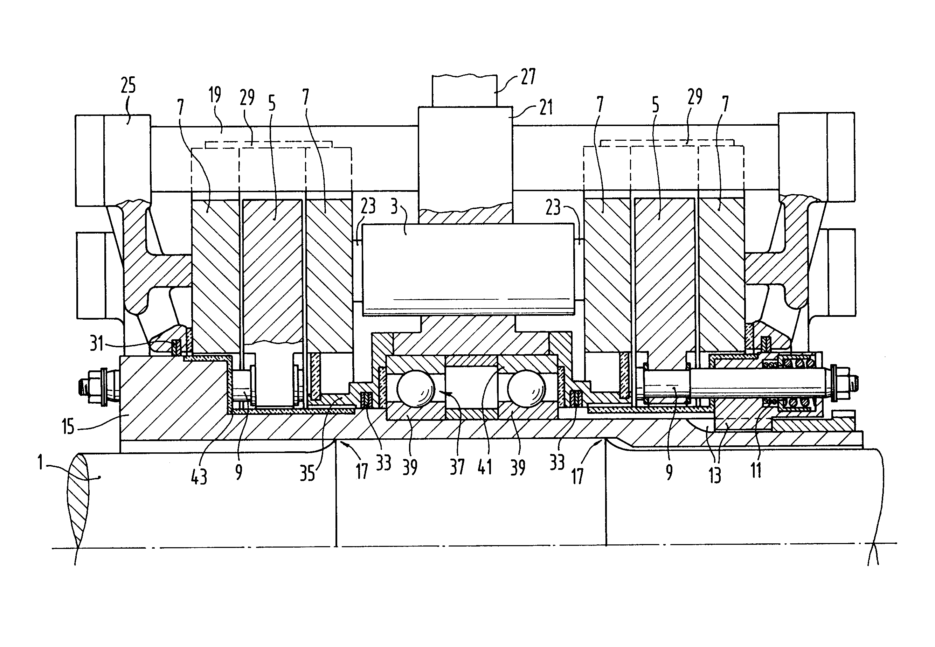

Die Erfindung ist nachfolgend anhand eines Ausführungsbeispiels unter Bezugnahme auf die beigefügte Zeichnung erläutert.

Die Zeichnung zeigt in Teilschnittansicht die Lamellenscheibenbremse gemäß der Erfindung.

In der einzigen, eine Teilschnittansicht wiedergebenden Zeichnung ist die Welle 1 eines Schienenfahrzeuges dargestellt, auf welcher die Lamel- lenscheibenbremse angeordnet ist. Die Lamellen- scheibenbremse ist gemäß der Erfindung in Zwillingsanordnung ausgebildet, wobei zu beiden Seiten einer mittig angeordneten Zuspanneinrichtung 3 Rotorelemente 5 und Statorelemente 7 vorgesehen sind. Die Rotorelemente 5 sind mit Hilfe von Rotortragbolzen 9 (von welchen in der Zeichnung jeweils nur einer dargestellt ist) und im einzelnen nicht erläuterten Nachstelleinrichtungen 11 mit der Welle 1 verbunden. Es können mehrere Nachstelleirichtungen 11 unter Winkelabstand zueinander vorgesehen sein; sie sind mit einer Keilanordnung 13 drehfest auf einer Nabe 15 befestigt, welche ihrerseits auf einem Bund 17 der Welle 1 unter Preßsitz befestigt ist. Drehungen der Welle 1 werden demnach über die Nabe 15 und die gleichfalls in der Nabe angeordneten Nachstelleinrichtungen bzw. deren Rotortragbolzen 9 auf die beidseitig der Zuspanneinrichtung 3 befindlichen Rotorelemente 5 übertragen.

Zu beiden Seiten der Rotorelemente 5 sind drehfest die Statorelemente 7 ausgerichtet; die Statorelemente 7 sind von Statorträgern 19 drehfest gehalten, sie sind jedoch in gleicher Weise wie die Rotorelemente 5 axial verschieblich geführt. Die Statorelemente 7 sind hierbei mittels (im einzelnen nicht dargestellter) Keilführungen am mit einer Momentenstütze 21 verbundenen Statorträger 19 axial beweglich gelagert, wobei sich die inneren, einander zugewandten Statorelemente 7 jeweils an stirnseitigen Druckstücken 23 der Zuspanneinrichtungen 3 abstützen. Die axial außerhalb der Rotorelemente 5 befindlichen Statorelemente 7 stützen sich ihrerseits an Tragringen 25 ab, welche mit den Statorträgern 19 verbunden sind. Die Momentenstütze 21 steht mittels eines Hebels 25 z.B. mit dem (nicht dargestellten) Drehgestell des Schienenfahrzeugs in Verbindung und trägt die Zuspanneinrichtung 3, von welcher mehrere unter Winkelabstand zueinander in einer die Welle 1 umgebenden Position vorgesehen sein können. Die Zuspanneinrichtungen sind z.B. als durch Druckmittel beaufschlagbare Zuspannzylinder ausgebildet, welche zum Zwecke der Abbremsung jeweils über die stirnseitigen Druckstücke 23 auf das zugewandte Statorelement 7 einwirkt, derart, daß das Statorelement 7 in Anlage mit dem Rotorelement 5 gebracht wird und beide Elemente zusammen axial verschieblich an die in der Zeichnung außen befindlichen Statorelemente angepreßt werden. Auf diese Weise werden die Rotorelemente 5 durch Reibungseingriff mit den Statorelementen 7 gebremst.

Im allgemeinen bestehen die Statorelemente in gleicher Weise wie die Rotorelemente bei Lamellenscheibenbremsen der in Rede stehenden Art aus Kohlenstoff (CFC), wobei aus Gründen der Oxidationsgefahr des Reibmaterials eine Kapselung des unmittelbaren Reibflächenbereiches von Rotor- und Statorelementen erforderlich ist. Gemäß Zeichnung sind die die Rotorelemente 5 zwischen sich begrenzenden Statorelemente 7 durch einen Oxidationsschutz 29 überbrückt, derart, daß der zwischen den Statorelementen 7 befindliche, das Rotorelement 5 aufnehmende Raum im radialen Außenbereich abgedichtet ist; im Bereich der Nabe 15 axial außerhalb der beiden äußeren Statorelemente 7 sind Dichtungen 31 vorgesehen, welche vorzugsweise am Innenumfang des stationär gehaltenen Tragrings 25 jeweils in eine Nut eingesetzt sind und gegenüber der sich drehendedn Nabe 15 wirken. Eine weitere Dichtung 33 befindet sich am Innenumfang eines Lagerdeckels 35, welcher seinerseits am Innenumfang der Momentenstütze 21 befestigt ist, wobei die beiden Lagerdeckel 35 stirnseitig ein zentrales Lager 37 eingrenzen. Das Lager 37 ist im dargestellten Ausführungsbeispiel als Wälzlager ausgebildet, wobei die inneren Laufringe 39 mit der Nabe 15 umlaufen, während die radial außen liegenden Laufringe 41 gegenüber Drehung gesichert sind. Das Lager 37 stellt demnach die Anlenkung der Momentenstütze gegenüber der Welle 1 dar; in gleicher Weise wie die Zuspanneinrichtung 3 ist das Lager 37 infolge der Zwillingsanordnung der Lamellenscheibenbremse weitgehend geschützt gegenüber den in den Lamellenpaketen bestehenden Bereichen großer Hitze.

Zwischen dem Außenumfang der beiden Lagerdeckel 35 und dem Innenumfang der innenliegenden Statorelemente 7 sind gleichfalls Dichtelemente 43 vorgesehen, welche gleichzeitig als Wärmeisolation wirken, wodurch das vorstehend genannte Lager 37 und der Bereich der Zuspanneinrichtung vor Hitzeeinwirkung geschützt sind.

Zur Vermeidung der Wärmeübertragung von den Lamellenpaketen auf die Nabe 15 ist diese im inmittelbar angrenzenden Bereich mit einer Wärmeisolation 43 überzogen, wie die linksseitige Schnitthälfte in der Zeichnung wiedergibt; im Bereich der Nachstelleinrichtung 11 ist in gleicher Weise mittels einer Wärmeisolation 45 dafür vorgesorgt, daß eine zu starke Wärmeabstrahlung in den Bereich der Nachstelleinrichtung und der Nabe unterbleibt.

Die in der Zeichnung wiedergegebene Anordnung kann zusätzlich durch ein Gehäuse umgeben sein, welches zur Lüftungsführung dient d.h. von einer der Stirnseiten zuströmende Luft wird an den abzukühlenden Teilen vorbeigeleitet und verläßt die Anordnung an der entgegengesetzten Stirnseite, ggf. mit Unterstützung von Lüftern bzw. Gebläseeinheiten, welche stirnseitig angeordnet sind.

**Bezugzeichenliste**

| 1 | Welle |
|---|---|
| 3 | Zuspanneinrichtung |
| 5 | Rotorelement |
| 7 | Statorelement |
| 9 | Rotortragbolzen |
| 11 | Nachstelleinrichtung |
| 13 | Keilanordnung |
| 15 | Nabe |
| 17 | Bund |
| 19 | Statorträger |
| 21 | Momentenstütze |
| 23 | Druckstück |
| 25 | Tragring |
| 27 | Hebel |
| 29 | Oxidationsschutz |
| 31 | Dichtung |
| 33 | Dichtung |
| 35 | Lagerdeckel |
| 37 | Lager |
| 39 | Laufring |
| 41 | Laufring |
| 43 | Wärmeisolation |
| 45 | Wärmeisolation |

**Patentansprüche**

1. Lamellenscheibenbremse für Schienenfahrzeuge, mit einem durch eine Zuspanneinrichtung beaufschagbaren Lamellenpaket, welches durch aus CFC-Material bestehende Rotor- und Statorelemente gebildet ist, gekennzeichnet durch folgende Merkmale:

a) das Lamellenpaket ist in einer Zwillingsanordnung aufgeteilt, derart, daß die Zuspanneinrichtung (3) zwischen zwei wenigstens je aus einem Rotorelement (5) und beidseitig des Rotorelements geführten Statorelementen (7) angeordnet ist; und

b) die Einzelpakete sind zum Schutz vor Oxidation der miteinander in Eingriff gelangenden Reibflächen der Rotor- und Statorelemente gekapselt ausgebildet.

2. Lamellenscheibenbremse, dadurch gekennzeichnet, daß die Zuspanneinrichtung (3) als eine Spreiz-Zylinderanordnung ausgebildet ist und sich zwischen einander zugewandten Statorelementen (7) der beiden Einzelpakete befindet, wobei stirnseitige Druckstücke (23) der Zuspannenrichtung gegenüber den Statorelementen (7) der beiden Einzelpakete wirken.

3. Lamellenscheibenbremse nach Anspruch 2, gekennzeichnet durch eine Vielzahl von unter Winkelabstand zueinander angeordneten Zuspanneinrichtungen (3).

4. Lamellenscheibenbremse nach einem der vorangehenden Ansprüche, dadurch gekennzeichnet, daß sich die Momentenstütze (21) der Bremsanordnung radial im Bereich der Zuspanneinrichtung(en) (3) erstreckt und gegenüber der Welle (1) des Schienenfahrzeugs mittels eines Lagers (37) abgestützt ist.

5. Lamellenscheibenbremse nach Anspruch 1, dadurch gekennzeichnet, daß die Einzelpakete aus Rotor- und Stator-Elementen (5,7) am Außenumfang einer das Lager (37) tragenden Nabe (15) angeordnet sind, und daß die Nabe (15) unter Preßsitz auf der Welle (1) befestigt ist.

6. Lamellenscheibenbremse nach Anspruch 1 oder 2, dadurch gekennzeichnet, daß die zwischen sich jeweils ein Rotorelement (5) begrenzenden Statorelemente (5) an ihrem Außenumfang durch einen Oxidationsschutz (29) überbrückt sind, und daß Dichtungen (31,33) im Bereich des Innenumfangs der beiden Statorelemente als Oxidationsschutz gegenüber dem Inneren der Einzelpakete vorgesehen sind.

7. Lamellenscheibenbremse nach einem der vorangehenden Ansprüche, dadurch gekennzeichnet, daß die Statorelemente an ihrem Außenumfang in einem Statorträger (19) längsbeweglich geführt sind.

8. Lamellenscheibenbremse nach einem der vorangehenden Ansprüche, dadurch gekennzeichnet, daß die Rotorelemente (5) jeweils auf einem in Axialrichtung sich erstreckenden Rotortragbolzen (9) axial verschieblich geführt sind, und daß die Rotortragbolzen jeweils in einer Nachstelleinrichtung (11) als Bestandteil derselben angeordnet sind.

9. Lamellenscheibenbremse nach einem der vorangehenden Ansprüche, dadurch gekennzeichnet, daß der Außenumfang der Nabe (15) im Bereich des Innenumfangs der Stator- und Rotorelemente mit einer Wärmeisolation (43,45) bedeckt ist.

# EUROPÄISCHER
# RECHERCHENBERICHT

Nummer der Anmeldung

## EP 91 11 4157

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 505 177   (DUNLOP LTD.)<br>* Seite 2, Zeile 5 - Seite 13, Zeile 6; Figuren 1-9 *<br>– – – | 1,3,5,9 | B 61 H 5/00<br>B 61 H 15/00<br>F 16 D 55/10 |
| X | GB-A-1 051 753   (MORTIMER et al.)<br>* Seite 1, Zeile 40 - Seite 2, Zeile 96; Figuren 1,2 * | 2,4,6,7 | F 16 D 65/847<br>B 60 T 1/06 |
| Y | | 1,3,5,9 | |
| | – – – | | |
| A | US-A-2 148 818   (H. KATTWINKEL)<br>* Seite 1, rechte Spalte, Zeile 15 - Seite 3, linke Spalte, Zeile 23; Figuren 1-3 *<br>– – – | 8 | |
| A | DE-A-2 634 217   (DAIMLER-BENZ AG)<br>* Seite 7, Zeile 25 - Seite 8, Zeile 7; Figur 2 *<br>– – – – – | 5 | |

|   |
|---|
| RECHERCHIERTE SACHGEBIETE (Int. Cl.5) |
| B 61 H<br>B 60 T<br>F 16 D |

**Der vorliegende Recherchenbericht wurde für alle Patentansprüche erstellt**

| Recherchenort | Abschlußdatum der Recherche | Prüfer |
|---|---|---|
| Den Haag | 23 Dezember 91 | VAN DER VEEN F. |